# FASCICULE DE BREVET EUROPEEN

(11) **EP 1 666 340 B1**
(45) Date de publication et mention de la délivrance du brevet: **15.06.2011**
(21) Numéro de dépôt: 05300986.6
(22) Date de dépôt: 01.12.2005
(51) Int. Cl.: B62D 21/11, B60G 7/02

(54) **Berceau pour essieu avant de véhicule automobile**
Hilfsrahmen für die Vorderachse eines Kraftfahrzeuges
Subframe for front axle of a motor vehicle

(30) Priorité: 02.12.2004 FR 0412789
(43) Date de publication de la demande: 07.06.2006
(73) Titulaire: Renault s.a.s., 92100 Boulogne Billancourt (FR)
(72) Inventeur: Rollet, Rémi, 91190 Gif (FR); Molins, Olivier, 78210 St Cyr (FR); Ascua, German, 78000 Versailles (FR)

(56) Documents cités:
- EP-A- 0 436 407
- EP-A- 0 683 088
- EP-A- 1 321 351
- DE-A1- 1 780 687
- DE-A1- 3 942 794
- DE-A1- 19 941 717
- DE-U1- 8 616 013
- DE-U1- 9 103 475
- FR-A- 2 813 273
- GB-A- 721 327
- US-A- 4 723 791
- PATENT ABSTRACTS OF JAPAN vol. 015, no. 468 (M-1184), 27 novembre 1991 (1991-11-27) & JP 03 200417 A (MAZDA MOTOR CORP), 2 septembre 1991 (1991-09-02)

## Description

L'invention concerne un berceau pour essieu avant de véhicule automobile, notamment un berceau du type présentant une forme générale en U ouverte vers l'avant du véhicule.

Un tel berceau est relié du côté de son extrémité arrière fermée aux longerons du véhicule au moyen d'articulations axisymétriques d'axe sensiblement vertical. Ces articulations ont également pour fonction de filtrer les vibrations entre le berceau et les longerons. Les extrémités libres du berceau, dirigées vers l'avant du véhicule et reliées à la structure du véhicule, sont également reliées par l'intermédiaire de pièces de liaison généralement triangulaires aux portes fusées des roues avant.

Ce type de berceau est plus léger que les berceaux en forme de cadre, tel celui décrit dans le document US 4,723,791, présentant deux articulations élastiques sur chaque longeron du véhicule au niveau de la partie arrière du véhicule. Il présente toutefois l'inconvénient, sous l'effet d'un effort transversal, de tourner dans le sens du survirage par rapport à ces articulations, et de créer du ballant (déplacement transversal) au niveau des roues. Ceci conduit à utiliser des articulations assez raides, allant à l'encontre de la filtration des vibrations.

On connaît également, par le document EP 0436407, une lame réalisée en matériau composite et qui s'étendent transversalement entre les roues avant d'un véhicule automobile. Cette lame réalise les fonctions de ressort de suspension, de structure support de train, de guidage des roues, ainsi que de barre anti-dévers. Pour ce faire, elle est fixée en quatre points : deux points de fixation arrière 10 et 10' permettent de fixer la lame directement à la structure de la caisse et sont construits de façon à immobiliser le berceau dans les trois directions X, Y, Z, et deux points de fixation avant 11 et 11' permettent de fixer la lame à la structure de la caisse de façon à bloquer les mouvements de ladite lame suivant la direction Z (hauteur) tout en laissant une légère libertée dans les directions X et Y (longidutinale et latérale) grâce à l'emploi de biellettes montées sensiblement verticalement. Un tel filtrage n'est pas optimal dans le plan horizontal notamment par la raideur élevée de la lame.

Il est également connu, par le document FR 2813273, un berceau suspendu comprenant un organe rigide en forme de plaque destiné à supporter le moteur d'un véhicule automobile. Ce berceau supporte deux bras de suspension articulés, chacun de ces bras supportant une roue du véhicule, ainsi que plusieurs organes. Chaque bras de suspension est préférentiellement articulé sur la plaque en un point d'articulation avant et en un point d'articulation arrière.

Le document US 6250660 B divulgue aussi un essieu pertinent dans ce contexte.

L'invention vise à pallier ces inconvénients en proposant un berceau du type décrit ci-dessus moins sensible aux efforts transversaux et permettant ainsi d'améliorer le compromis entre la tenue de route du véhicule et la filtration des vibrations.

A cet effet, l'objet de l'invention concerne un berceau pour essieu avant d'un véhicule automobile, selon la revendication 1.

Dans un mode de réalisation, la direction de l'articulation présentant une raideur plus élevée est inclinée d'un angle β par rapport à la direction longitudinale du véhicule, et en direction du plan de symétrie vers l'avant du véhicule.

De préférence, l'angle β est compris entre α et α/2, l'angle α correspondant à un angle pour lequel le ballant du berceau est minimal sous effort transversal.

Plus particulièrement, pour un berceau dont les extrémités libres sont reliées chacune au porte fusée d'une roue par l'intermédiaire d'une pièce de liaison, l'angle α correspond à l'angle entre l'axe longitudinal du véhicule et une droite passant par l'articulation et par le point d'intersection entre le plan de symétrie et une droite joignant les points d'articulation des pièces de liaison aux portes fusées.

L'angle α est par exemple compris entre 40° et 45° environ.

Avantageusement, la direction de l'articulation présentant une raideur plus élevée est inclinée par rapport à la direction longitudinale du véhicule, et en direction du plan de symétrie vers l'avant du véhicule, d'un angle de 30° environ.

Avantageusement, le rapport des raideurs des articulations entre la direction de raideur élevée et celle de raideur faible est compris entre 1,5 et 3.

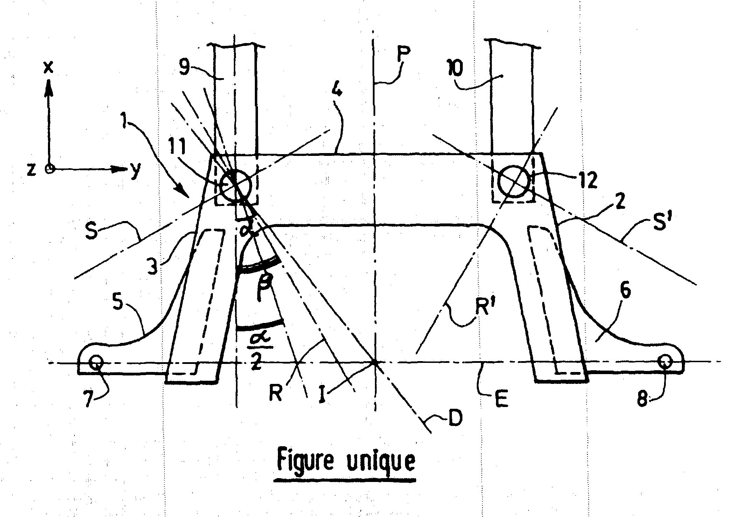

L'invention est maintenant décrite en référence au dessin annexé, non limitatif, dans lequel la figure unique est une représentation schématique, vue de dessus, d'un berceau selon l'invention.

Sur la figure, les directions X, Y, Z, représentent respectivement les directions longitudinale, transversale et verticale du véhicule. La direction longitudinale est dirigée vers l'arrière du véhicule.

Le berceau 1 selon l'invention présente une forme générale sensiblement en forme de U vu de dessus, l'ouverture du U étant dirigée vers l'avant du véhicule. Il présente ainsi deux parties longitudinales 2 et 3 reliées par une partie transversale 4.

Chaque partie longitudinale 2, 3 est reliée à deux sommets d'une pièce de liaison 5, 6, respectivement, de forme sensiblement triangulaire. Le troisième sommet de chaque pièce 5, 6 est destiné à être relié au porte fusée d'une roue au moyen d'une articulation 7, 8, respectivement. Ces articulations 7, 8 sont généralement situées sensiblement au niveau des extrémités libres des parties longitudinales 2, 3 du berceau.

De part et d'autre de sa partie transversale 4, le berceau est relié aux longerons 9, 10 du véhicule au moyen d'articulations 11, 12, respectivement, d'axe sensiblement vertical.

Ces articulations 11, 12 sont conçues pour filtrer les vibrations entre le berceau et les longerons. Ce sont des articulations cylindriques présentant des raideurs différentes dans deux directions perpendiculaires entre elles, et perpendiculaires à l'axe des articulations. Ces raideurs différentes sont obtenues de manière connue en ménageant dans l'articulation des alvéoles dans la direction de plus faible raideur.

Le berceau 1 présente un plan de symétrie vertical et longitudinal P.

On désigne par R, la direction de l'articulation 11 présentant une raideur plus élevée, et par S, la direction de l'articulation 11 présentant une raideur plus faible. Le rapport entre la raideur la plus élevée et la raideur la plus faible de l'articulation est de préférence compris entre 1,5 et 3 environ.

Dans l'exemple, la direction R forme un angle β d'environ 30° par rapport à la direction longitudinale X du véhicule, et en direction du plan de symétrie P vers l'avant du véhicule.

Cet angle β est de préférence compris entre α et α/2, l'angle α étant défini comme l'angle pour lequel le ballant du berceau est minimal sous effort transversal.

Cet angle α peut notamment être défini comme l'angle compris entre l'axe longitudinal X et une droite D passant par l'articulation 11 et par le point d'intersection I entre le plan de symétrie P et une droite E joignant les articulations 7, 8 des pièces de liaison 5, 6 aux portes fusées.

Cet angle α est de préférence compris entre 40° et 45° environ.

En variante, l'angle β peut également être déterminé en calculant la rotation et le ballant d'un berceau soumis à un effort transversal tout en faisant varier l'orientation des directions R et S des articulations. L'angle β correspond alors une valeur sensiblement moyenne entre celles permettant de minimiser la rotation d'une part et le ballant d'autre part.

Les directions de raideur élevée R' et de raideur faible S' de l'autre articulation 12 sont sensiblement symétriques des directions R et S de l'articulation 11 par rapport au plan de symétrie P.

Par ailleurs, de préférence, les raideurs des articulations 11 et 12 sont choisies de manière à conserver un comportement vis-à-vis de la filtration des vibrations sensiblement identique au comportement des articulations axisymétriques conventionnellement utilisées.

## Revendications

1. Berceau (1) pour essieu avant d'un véhicule automobile, présentant une forme générale en U ouverte vers l'avant du véhicule, et articulé aux longerons (9, 10) du véhicule au moyen d'articulations (11, 12) d'axe sensiblement vertical aptes à filtrer les vibrations, les articulations étant sensiblement symétriques par rapport à un plan de symétrie (P) vertical et longitudinal du berceau,
**caractérisé en ce que** :
- le berceau (1) est articulé par seulement une articulation sur chaque longeron, ladite articulation étant située du côté de la partie fermée du berceau,
- les articulations présentent une raideur différente dans deux directions (R, S; R', S') perpendiculaires entre elles et aux axes d'articulation,
- l'orientation par rapport à la direction longitudinale (X) du véhicule de ces directions (R, S; R', S') de raideur différente est déterminée de manière à minimiser le ballant et la rotation du berceau sous effort transversal,

2. Berceau selon la revendication 1, **caractérisé en ce que** la direction (R, R') de l'articulation présentant une raideur plus élevée est inclinée d'un angle (β) par rapport à la direction longitudinale du véhicule, et en direction du plan de symétrie (P) vers l'avant du véhicule.

3. Berceau selon la revendication 2, **caractérisé en ce que** l'angle est compris entre (α) et (α/2), l'angle (α) correspondant à un angle pour lequel le ballant du berceau est minimal sous effort transversal.

4. Berceau selon la revendication 3, dans lequel les extrémités libres du berceau sont reliées chacune au porte fusée d'une roue par l'intermédiaire d'une pièce de liaison (5, 6), **caractérisé en ce que** l'angle (α) correspond à l'angle entre l'axe longitudinal (X) du véhicule et une droite (D) passant par l'articulation (11) et par le point d'intersection (I) entre le plan de symétrie (P) et une droite (E) joignant les points d'articulation (7, 8) des pièces de liaison (5, 6) aux portes fusées.

5. Berceau selon la revendication 3 ou 4, **caractérisé en ce que** l'angle (α) est compris entre 40° et 45° environ.

6. Berceau selon l'une des revendications 1 à 5, **caractérisé en ce que** la direction de l'articulation présentant une raideur plus élevée (R, R') est inclinée par rapport à la direction longitudinale du véhicule, et en direction du plan de symétrie (P) vers l'avant du véhicule, d'un angle de 30° environ.

7. Berceau selon l'une des revendications 1 à 6, **caractérisé en ce que** le rapport des raideurs des articulations entre la direction de raideur élevée (R, R') et celle de raideur faible (S, S') est compris entre 1,5 et 3.

## Claims

1. Subframe (1) for a front axle of a motor vehicle, which has a general U shape open towards the front of the vehicle and which is articulated to the side rails (9, 10) of the vehicle by means of articulations (11, 12) of substantially vertical axis which are able to filter vibrations, the articulations being substantially symmetrical with respect to a plane of vertical and longitudinal symmetry (P) of the subframe, **characterized in that**:
- the subframe (1) is articulated by only one articulation to each side rail, the said articulation being situated on the closed part side of the subframe,
- the articulations have a different stiffness in two directions (R, S; R', S') perpendicular to one another and to the articulation axes,
- the orientation with respect to the longitudinal direction (X) of the vehicle of these directions (R, S; R', S') of different stiffness is determined so as to minimize the swing and the rotation of the subframe under transverse load.

2. Subframe according to Claim 1, **characterized in that** the direction (R, R') of the articulation having a higher stiffness is inclined by an angle (β) with respect to the longitudinal direction of the vehicle, and in the direction of the plane of symmetry (P) towards the front of the vehicle.

3. Subframe according to Claim 2, **characterized in that** the angle (β) is between (α) and (α/2), the angle (α) corresponding to an angle for which the swing of the subframe is minimal under transverse load.

4. Subframe according to Claim 3, in which the free ends of the subframe are each connected to the stub axle of a wheel via a connection piece (5, 6), **characterized in that** the angle (α) corresponds to the angle between the longitudinal axis (X) of the vehicle and a straight line (D) passing through the articulation (11) and through the point of intersection (I) between the plane of symmetry (P) and a straight line (E) joining the articulation points (7, 8) of the connection pieces (5, 6) to the stub axles.

5. Subframe according to Claim 3 or 4, **characterized in that** the angle (α) is between 40° and 45° approximately.

6. Subframe according to one of Claims 1 to 5, **characterized in that** the direction of the articulation having a higher stiffness (R, R') is inclined with respect to the longitudinal direction of the vehicle, and in the direction of the plane of symmetry (P) towards the front of the vehicle, by an angle of 30° approximately.

7. Subframe according to one of Claims 1 to 6, **characterized in that** the ratio of the stiffnesses of the articulations between the direction of high stiffness (R, R') and that of low stiffness (S, S') is between 1.5 and 3.

## Patentansprüche

1. Halterung (1) für Vorderachse eines Kraftfahrzeugs, die die allgemeine Form eines U hat, das zur Vorderseite des Fahrzeugs geöffnet ist, und an Längsträgern (9, 10) des Fahrzeugs mittels Gelenken (11, 12) mit im Wesentlicher vertikaler Achse, die Schwingungen filtern können, angelenkt ist, wobei die Gelenke in Bezug auf eine vertikale und longitudinale Symmetrieebene (P) der Halterung im Wesentlichen symmetrisch sind,
**dadurch gekennzeichnet, dass**:
- die Halterung (1) an jedem Längsträger durch nur ein Gelenk angelenkt ist, wobei sich das Gelenk auf Seiten des geschlossenen Teils der Halterung befindet,
- die Gelenke in zwei Richtungen (R, S; R', S'), die zueinander und zu den Gelenkachsen senkrecht sind, einen unterschiedlichen Radius aufweisen,
- die Orientierung dieser Richtungen (R, S; R', S') der unterschiedlichen Radien in Bezug auf die Längsrichtung (X) des Fahrzeugs in der Weise bestimmt ist, dass das Schwenken und Drehen der Halterung unter einer transversalen Beanspruchung minimal ist.

2. Halterung nach Anspruch 1, **dadurch gekennzeichnet, dass** die Richtung (R, R') des Gelenks, das einen größeren Radius aufweist, um einen Winkel (β) in Bezug auf die Längsrichtung des Fahrzeugs und in Richtung der Symmetrieebene (P) zur Vorderseite des Fahrzeugs geneigt ist.

3. Halterung nach Anspruch 2, **dadurch gekennzeichnet, dass** der Winkel (β) im Bereich von (α) und (α/2) liegt, wobei der Winkel (α) einem Winkel entspricht, für den das Schwenken der Halterung unter einer transversalen Beanspruchung minimal ist.

4. Halterung nach Anspruch 3, wobei die freien Enden der Halterung jeweils über ein Verbindungsteil (5, 6) mit dem Nabenträger verbunden sind, **dadurch gekennzeichnet, dass** der Winkel (α) dem Winkel zwischen der Längsachse (X) des Fahrzeugs und einer Geraden (D) entspricht, die durch das Gelenk (11) und durch den Schnittpunkt (I) zwischen der Symmetrieebene (P) und einer Geraden (E) verläuft, die die Gelenkpunkte (7, 8) der Verbindungsteile (5, 6) an den Nabenträgern verbindet.

5. Halterung nach Anspruch 3 oder 4, **dadurch gekennzeichnet, dass** der Winkel (α) im Bereich von etwa 40° bis 45° liegt.

6. Halterung nach einem der Ansprüche 1 bis 5, **dadurch gekennzeichnet, dass** die Richtung des Gelenks, das einen größeren Radius (R, R') aufweist, in Bezug auf die Längsrichtung des Fahrzeugs und in Richtung der Symmetrieebene (P) zur Vorderseite des Fahrzeugs um einen Winkel von etwa 30° geneigt ist.

7. Halterung nach einem der Ansprüche 1 bis 6, **dadurch gekennzeichnet, dass** das Verhältnis der Radien der Gelenke zwischen der Richtung mit großem Radius (R, R') und jener mit kleinem Radius (S, S') im Bereich von 1,5 bis 3 liegt.
